# EUROPÄISCHE PATENTSCHRIFT

(11) **EP 1 174 644 B1**
(45) Veröffentlichungstag und Bekanntmachung des Hinweises auf die Patenterteilung: **17.09.2003**
(21) Anmeldenummer: 01126378.7
(22) Anmeldetag: 20.07.1998
(51) Int. Cl.: F16H 15/38

(54) **Stufenloses Reibradgetriebe**
Infinitely variable friction gearing
Engrenage à friction variable en continu

(30) Priorität: 25.07.1997 DE 19732082
(43) Veröffentlichungstag der Anmeldung: 23.01.2002
(62) Teilanmeldung aus: 98941369.5
(73) Patentinhaber: ZF FRIEDRICHSHAFEN Aktiengesellschaft, 88038 Friedrichshafen (DE)
(72) Erfinder: Kuhn, Walter, 88045 Friedrichshafen (DE); Wafzig, Jürgen, 88097 Eriskirch (DE)

(56) Entgegenhaltungen:
- EP-A- 0 416 594
- EP-A- 0 459 291
- PATENT ABSTRACTS OF JAPAN vol. 1997, no. 02, 28. Februar 1997 (1997-02-28) -& JP 08 270746 A (NISSAN MOTOR CO LTD), 15. Oktober 1996 (1996-10-15)
- PATENT ABSTRACTS OF JAPAN vol. 013, no. 489 (M-888), 7. November 1989 (1989-11-07) -& JP 01 193454 A (NISSAN MOTOR CO LTD), 3. August 1989 (1989-08-03)

## Beschreibung

Die vorliegende Erfindung betrifft ein stufenloses Reibradgetriebe nach dem Oberbegriff des Anspruchs 1, wie es beispielsweise aus der EP-A-459291 bekannt ist.

Ein derartiges stufenloses Reibradgetriebe weist üblicherweise koaxial zu einer gemeinsamen Welle angeordnete Eingangs- und Ausgangsscheiben auf, die paarweise zueinander angeordnet sind und deren Innenflächen toroidförmig ausgestaltet sind sowie zwischen den Paaren von Eingangs- und Ausgangsscheiben angeordnete Reibräder. Diese Reibräder stehen sowohl mit den Eingangsscheiben als auch mit den Ausgangsscheiben in Reibkontakt und übertragen das ihnen von der Eingangsscheibe übertragene Drehmoment auf die Ausgangsscheibe durch reibschlüssigen Kontakt, wobei die Drehzahl der Reibräder um so höher ist, je größer der Abstand zwischen ihrer Berührungsstelle mit der Eingangsscheibe und der Drehachse ist. Die Drehzahl der Ausgangsscheibe hingegen ist um so größer, je näher die Berührungsstelle zwischen Reibrad und Ausgangsscheibe an der Drehachse liegt. Durch Verschwenkung der Reibräder kann demzufolge die Drehzahl der Ausgangsscheibe stufenlos und beliebig eingestellt werden. Zu diesem Zweck sind die Drehachsen der Reibräder an einem Träger gelagert, der über eine Verschwenkeinrichtung ansteuerbar ist.

Das Grundprinzip eines derartigen stufenlosen Reibradgetriebes ist bereits in der US-2 152 796, die im Jahre 1939 veröffentlicht wurde, beschrieben. Darin sind zwei Paare konkaver Eingangs- und Ausgangsscheiben vorgesehen, zwischen denen schwenkbar gelagerte Reibräder angeordnet sind, so daß ein über eine Eingangswelle den Eingangsscheiben und den Reibrädern übertragenes Drehmoment je nach Relativstellung der Reibräder mit einem davon abhängigen Übersetzungsverhältnis über die Ausgangsscheiben, eine Zahnradstufe und eine Hohlwelle einem Summierungsgetriebe in Form eines Planetengetriebes zugeführt wird. Der Steg des Planetengetriebes treibt eine Ausgangswelle, die mit den Antriebsrädern, z. B. eines Kraftfahrzeuges, verbunden ist. Die Ausgangswelle kann dabei parallel zur und im Abstand von der Ausgangswelle angeordnet sein. Das Ausgangszahnrad und die beiden Ausgangsscheiben sind drehbar auf einer Hülse gelagert, die an ihren Enden in Lagerstützen abgestützt ist. Die Anordnung der Lagerstützen zwischen jeweils einer Ein- und Ausgangsscheibe setzt einen genügend großen Bauraum zwischen diesen Scheiben voraus.

Das Getriebe nach der US-PS 3 739 658 weist ebenfalls einen zweizügigen Variator mit zwei paarweise angeordneten Ein- und Ausgangsscheiben auf, zwischen denen schwenkbar gelagerte Reibräder angeordnet sind. Bei dieser Konstruktion ist eine Lagerstütze vorhanden, die Bestandteil des Gehäuses ist und die räumlich zwischen den beiden Ausgangsscheiben liegend angeordnet ist. Die von den Ausgangsscheiben abfließende Leistung wird über ein Planetengetriebe, das zudem als Differential wirkt, einer Hohlwelle zugeleitet. Die Hohlwelle ist mit dem Ausgangszahnrad drehfest verbunden und wird über Kugellager in der Lagerstütze drehbar gehalten.

Das Ausgangszahnrad steht mit einem Zahnrad in Antriebsverbindung, das drehfest am Gehäuse eines Drehmomentwandlers befestigt ist. Dieser treibt die Ausgangswelle des Getriebes. Die Anordnung des Drehmomentwandlers am Eingang der Ausgangswelle bedingt einen relativ großen Achsabstand zwischen Ein- und Ausgangswelle des Getriebes. Damit sind die Anwendungsfälle für dieses Getriebe stark eingeschränkt, weil der erforderliche Einbauraum nicht immer zur Verfügung steht.

Aus der US-4 893 517 ist ein stufenloses Reibradgetriebe bekannt mit einer Eingangswelle, die ein Gehäuse durchsetzt. Das Gehäuse ist mittels einer Trennwand in zwei Hohlräume unterteilt, in denen jeweils eine Eingangsscheibe und eine ihr gegenüberliegende Ausgangsscheibe mit dazwischenliegenden Reibrädern gelagert sind, wobei sowohl die Eingangsscheibe als auch die Ausgangsscheibe in den beiden Hohlräumen auf einer gemeinsamen Achse liegen, zu der die Reibräder zur Erzielung der gewünschten Geschwindigkeitsübersetzung verschwenkt werden können. Die beiden Paare aus Eingangsscheiben und Ausgangsscheiben sind spiegelsymmetrisch zueinander in den beiden Hohlräumen derart angeordnet, daß die beiden Ausgangsscheiben nebeneinander liegen, und zwar zu beiden Seiten der die beiden Hohlräume voneinander trennenden Trennwand, in der ein Zahnrad gelagert ist, welches von den beiden Ausgangsscheiben gemeinsam mit dem Ausgangsdrehmoment beaufschlagt wird.

Dieses Drehmoment wird über ein weiteres, mit der Ausgangswelle verbundenes Zahnrad letzterer übertragen, die parallel zur Ausgangswelle angeordnet ist, und zwar derart, daß sie nur einen der beiden Hohlräume durchsetzt und mit dem entsprechenden Ende in der Trennwand gelagert ist.

Die Trennwand kann zusammen mit dem in ihr gelagerten Zahnrad und den dazu gehörigen Lagern und Abstandshaltern als vormontierte Einheit in das Gehäuse eingesetzt und mit diesem verschraubt werden. Die Möglichkeit der Vormontage ist jedoch auf wenige Einzelteile beschränkt; der Montageaufwand zur Komplettierung des Getriebes ist daher immer noch beträchtlich. Ein weiterer, bauartbedingter Nachteil des Getriebes besteht darin, daß sehr große Kräfte in das Getriebegehäuse eingeleitet werden, was eine stabile Bauweise - bei entsprechend hohem Gewicht - erforderlich macht.

Auch die US 5 033 322 beschreibt ein stufenloses Reibradgetriebe, das grundsätzlich den gleichen Aufbau wie die oben beschriebenen Reibradgetriebe aufweist, das heißt, zwei Getriebeeinheiten in Form von jeweils einer Eingangsscheibe, einer Ausgangsscheibe und dazwischen verschwenkbar gelagerten Reibrädern. Um zu verhindern, daß bei einem derartigen Reibradgetriebe immer dann, wenn die eine Getriebeeinheit von der Steuervorrichtung angesteuert wird, die Träger für die Reibräder der anderen Getriebeeinheit Schwingungen ausgesetzt werden, wird bei diesem bekannten Reibradgetriebe eine mechanische Einrichtung vorgesehen, welche die Bewegung des Paars erster Träger für die Reibräder und des Paars zweiter Träger für die Reibräder zueinander verhindert. Diese Einrichtung besteht aus unteren und oberen Querlenkern (d. h. Jochen), die die Lager für die Träger (Drehzapfen) der Reibräder aufnehmen und die um gehäusefeste Zapfen schwenkbeweglich angeordnet sind. Die Querlenkerpaare sind, um eine Relativbewegung zueinander auszuschließen, über in Längsrichtung verlaufende Stangen miteinander starr verbunden. Dadurch sollen die auf die Träger durch die Reibräder einwirkenden Schwingungen eingeschränkt werden, so daß der Schlupf an der zweiten Getriebeeinheit verringert wird.

Bei dem Reibradgetriebe nach der US-PS 4 934 206 ist das Ausgangszahnrad einerseits drehfest mit einer Hülse verbunden, die, von Lagern in einer Trennwand abgestützt, an ihrem gegenüberliegenden Ende in eine Ausgangsscheibe übergeht. Für diese Mitnahmeverbindung ist das Ausgangszahnrad mit einem Bund bestückt, der gleichzeitig - über eine Keilverbindung - für die drehfeste Lagerung und Befestigung der weiteren Ausgangsscheibe am Ausgangszahnrad vorgesehen ist. Bei den wirksamen hohen Drehmomenten erweist sich die drehfeste Verbindung der Ausgangsscheibe am Ausgangszahnrad als ungeeignet. Ferner wird die Lagerung der Ausgangsscheibe unmittelbar auf der Getriebehauptwelle ungünstig beeinflußt, da Exzentrizitäten zwischen dieser Lagerung und dem Außendurchmesser des Bundes am Ausgangszahnrad unvermeidbar sind.

Der vorliegenden Erfindung liegt die Aufgabe zugrunde, ein Reibradgetriebe zu schaffen, bei dem das Ausgangszahnrad hoch belastbar ist und das sich durch eine einfache Montage auszeichnet.

Die Erfindung löst die gestellte Aufgabe bei einem gattungsgemäßen stufenlosen Reibradgetriebe, das neben den Merkmalen des Oberbegriffs auch die Merkmale des kennzeichnenden Teils des Hauptanspruchs aufweist. Vorteilhafte bauliche Ausgestaltungen sind den Unteransprüchen zu entnehmen.

Die mit der Erfindung erzielbaren Vorteile bestehen insbesondere darin, daß die Lagerung für das Ausgangszahnrad hoch belastbar ist. Die axiale Baulänge wird im wesentlichen durch die Breite des verwendeten Zahnrads bestimmt, da die Lager - bezogen auf das Ausgangszahnrad - seitlich, d. h. in Axialrichtung, nicht überstehen. Durch die stehenden Innenringe und die rotierenden Außenringe dieser Lager ist zudem eine axial kurze Bauweise trotz einer großen Zahnradbreite realisierbar.

Im folgenden wird die Erfindung anhand der Zeichnung näher erläutert, in der ein vorteilhaftes Ausführungsbeispiel der Erfindung dargestellt ist.
Es zeigen:

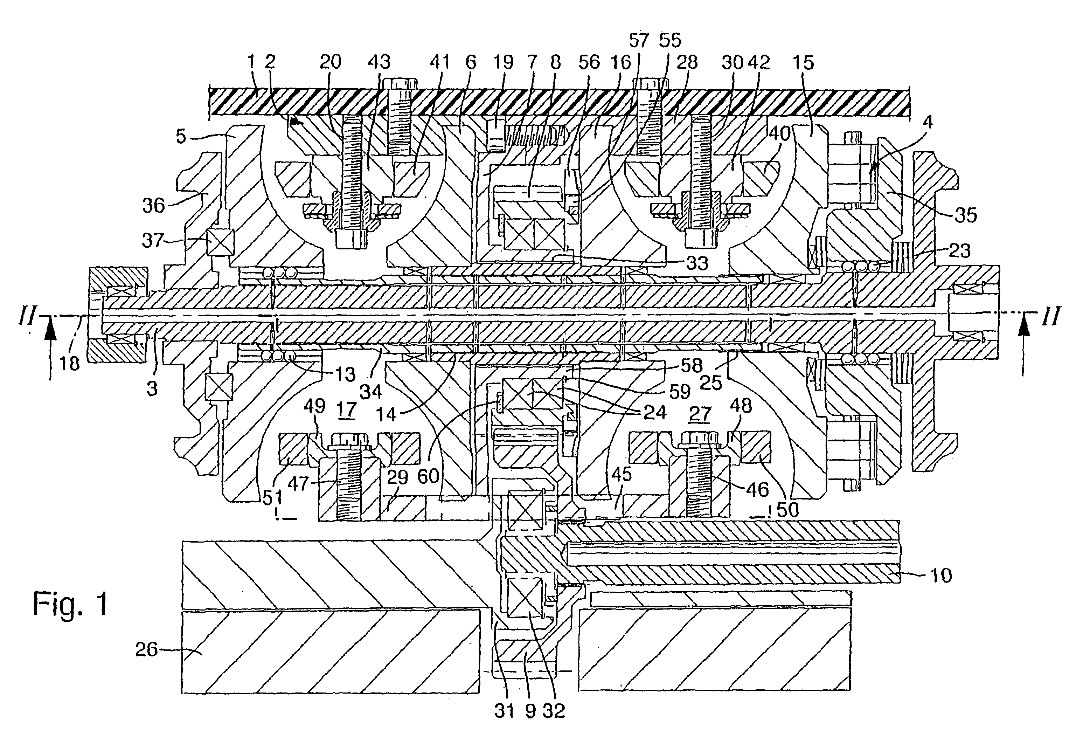

- Fig. 1: einen senkrechten Schnitt durch das erfindungsgemäße Reibradgetriebe,
- Fig. 2: einen um 90° dazu versetzten Schnitt entläng der Linie II-II von Fig. 1.

In den Figuren, in denen gleiche Teile mit gleichen Bezugszeichen versehen sind, bezeichnet 1 das Gehäuse des Reibradgetriebes (bzw. Toroidgetriebes), dessen Eingangswelle 3 mit einem nicht dargestellten Anfahrelement, z. B. mit einem Drehmomentwandler oder einer naßlaufenden Anfahrkupplung einer Antriebsmaschine eines Kraftfahrzeuges, verbunden ist. In dem Gehäuse 1 sind zwei Getriebeeinheiten koaxial zur Eingangswelle 3 angeordnet. Die eine Getriebeeinheit weist eine Eingangsscheibe 5 und eine Ausgangsscheibe 6 auf, deren einander zugewandte Oberflächen toroidförmig ausgestaltet sind; die andere Getriebeeinheit weist eine Eingangsscheibe 15 und eine ihr gegenüber angeordnete Ausgangsscheibe 16 auf, deren einander zugewandte Oberflächen ebenfalls toroidförmig ausgestaltet sind. In den beiden Getriebeeinheiten sind jeweils vorzugsweise zwei Reibräder 11, 21 vorgesehen, die an schwenkbaren Trägern 12 und 22 befestigt sind, so daß sie bezüglich der Längsachse 18 der Eingangswelle 3 verschwenkt werden können. Die Reibräder 11, 21 stehen in reibschlüssigem Kontakt mit den beiden ihnen zugewandten Oberflächen der Eingangsscheiben 5, 15 und der Ausgangsscheiben 6, 16, wobei die Reibräder einer Getriebeeinheit symmetrisch zur Achse der Eingangswelle 3 angeordnet sind.

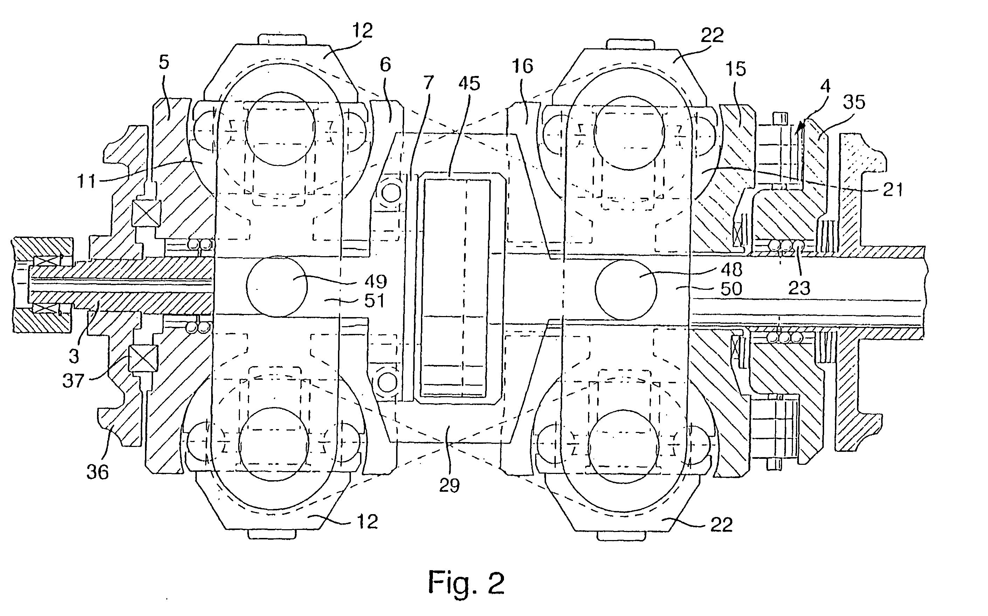

Werden nun die Reibräder 11, 21 durch die nicht im einzelnen dargestellte Verschwenkeinrichtung bezüglich der Längsachse der Eingangswelle 3 geneigt, so verschieben sich die Berührungspunkte des Umfangs der Reibräder 11, 21 aus der in Fig. 2 gezeigten Stellung entlang der toroidförmigen Oberfläche sowohl der Eingangsscheiben als auch der Ausgangsscheiben, wodurch das Übersetzungsverhältnis zwischen einer Eingangs- und einer Ausgangsgeschwindigkeit kontinuierlich, d. h. stufenlos, eingestellt werden kann.

Alle Scheiben 5, 15, 6, 16 sind auf einer Drehmomentwelle 34 gelagert, die geringfügig in Axialrichtung relativ zum Gehäuse 1 verschiebbar ist; die Eingangsscheibe 5 der einen Getriebeeinheit ist drehfest mit der Drehmomentwelle bei 13 befestigt, jedoch axial gleitend auf ihr gelagert. Auch die Eingangsscheibe 15 der anderen Getriebeeinheit ist drehfest durch eine Mitnahmeverzahnung 25 mit der Drehmomentwelle verbunden. Die beiden Ausgangsscheiben 6, 16 der beiden Getriebeeinheiten, die spiegelsymmetrisch zueinander und nebeneinander im Getriebe angeordnet sind, sind auf einer gemeinsamen Buchse 14 angeordnet, wobei die Ausgangsscheibe 16 fest mit einem Zahnrad 8 verbunden ist, das drehbar die Drehmomentwelle 34 umgibt. Ein Drehmoment, das von der einen Eingangsscheibe 5 der Ausgangsscheibe 6 und ein Drehmoment, das von der anderen Eingangsscheibe 15 der Ausgangsscheibe 16 übertragen wird, wird von den beiden drehfest mit der Buchse 14 verbundenen Ausgangsscheiben dadurch dem Zahnrad 8 übertragen, welches mit einem Zahnrad 9 kämmt, das mit der Ausgangswelle 10 fest verbunden ist. Mit 24 sind Lager für das Zahnrad 8 bezeichnet und mit 32 ein Lager für die Ausgangswelle 10.

Die drehfeste Verbindung der Ausgangsscheibe mit dem Ausgangszahnrad 8 ist vorzugsweise wie folgt aufgebaut:

Am Ausgangszahnrad 8 ist - in der Zeichnung rechts liegend - ein Innenring 55 drehfest, z. B. durch Schweißen, angebracht. Dieser Innenring weist an seinem Außenumfang eine Außenverzahnung auf. In diese Außenverzahnung greift eine Innenverzahnung eines Außenrings 56 ein. Die Innen- und Außenverzahnung des Innenrings 55 und Außenrings 56 bilden gemeinsam eine Mitnahmeverzahnung 57.

Der Außenring 56 ist drehfest mit der Ausgangsscheibe 16, z. B. durch Schweißen, verbunden. Auf diese Weise besteht zwischen der Ausgangsscheibe 16 und dem Ausgangszahnrad 8 eine drehfeste Verbindung, über die die anteiligen Leistungen der Ausgangsscheiben 6 und 16 aufsummiert und auf das Ausgangszahnrad 8 und letztlich auf das Zahnrad 9 der Ausgangswelle 10 geleitet werden.

Anstelle der Schweißverbindungen können, sofern es die Einbauverhältnisse zulassen, auch Schraubverbindungen zum Befestigen des Innenrings 55 bzw. des Außenrings 56 verwendet werden.

Bei einer alternativen Ausführungsform ist es möglich, auf den Innenring 55 gänzlich zu verzichten. Ein Teil der ohnehin vorhandenen Verzahnung des Ausgangszahnrads 8 kann als Teil einer Mitnahmeverzahnung eingesetzt werden. Die Innenverzahnung des Außenrings 56 wäre dann dieser Verzahnung anzupassen.

Die beschriebene drehfeste Verbindung zwischen der Ausgangsscheibe 16 und dem Ausgangszahnrad 8 erlaubt einerseits die Übertragung hoher Drehmomente. Andererseits ist eine einfache Montage gewährleistet, da die Mitnahmeverbindung durch die axiale Verschiebung der Ausgangsscheibe 16 in Richtung auf das Ausgangszahnrad 8 quasi selbsttätig hergestellt wird. Die beschriebene Mitnahmeverbindung hat zudem.den Vorteil, daß sie in Axialrichtung des Getriebes kaum Bauraum beansprucht.

Die Lager-24 zur Lagerung des Ausgangszahnrads 8 sind auf einem Bund 58 des topfförmigen Lagerstützglieds 7 nebeneinanderliegend angeordnet. Die Innenringe der Lager 24 verbleiben stationär in bezug auf den Bund 58, während die Außenringe der Lager 24 zusammen mit dem Ausgangszahnrad 8 rotieren. Die in Axialrichtung nebeneinander angeordneten Lager nehmen eine axiale Länge ein, die der Zahnradbreite des Ausgangszahnrads 8 im wesentlichen entspricht. Durch die vorstehend geschilderte Anordnung läßt sich insbesondere eine axial kurze Bauweise erzielen. Die Lager 24 werden über je einen Sicherungsring 59 am Bund 58 und 60 am Ausgangszahnrad 8 in Axialrichtung gesichert. Bei der Montage wird das Ausgangszahnrad 8 zusammen mit den Lagern 24 als vormontierte Einheit auf den Bund 58 geschoben und mit dem Sicherungsring 59 gesichert.

Mit 4 ist eine rollenförmige Anpreßeinrichtung bezeichnet, die zwischen der Eingangsscheibe 15 mit einer Kurvenbahn und einer Scheibe 35 mit einer Kurvenbahn vorgesehen ist und die in Axialrichtung verschiebbar über ein Lager 23 auf der Eingangswelle gelagert ist sowie drehfest mit ihr verbunden ist, wobei sie mit Hilfe der Anpreßeinrichtung 4 die Eingangsscheibe 15 in Axialrichtung zur Ausgangsscheibe 16 hin beaufschlagt. Mit 36 ist eine Axialscheibe bezeichnet, an der sich die Eingangsscheibe 5 über ein Lager 37 abstützt. Über die Welle 3 wird die Scheibe 5 zur Scheibe 6 über die Axialscheibe 36 bewegt.

Mit 7 ist ein topfförmiges Lagerstützglied 7 bezeichnet, das von der Drehmomentwelle 34 und der Buchse 14 mittig durchsetzt wird. Das Lagerstützglied ist zwischen dem Zahnrad 8 und der Ausgangsscheibe 6 angeordnet, so daß es diese Bauteile voneinander trennt. Es ist derart ausgestaltet, daß es das mit der Ausgangsscheibe 16 fest verbundene Zahnrad 8 aufnimmt. Mit dem Zahnrad 8 kämmt das Abtriebszahnrad 9 der Ausgangswelle 10.

Die Buchse 14 ist in der Bohrung des topfförmigen Lagerstützgliedes 7 über ein Nadellager 33 gelagert. Das Lagerstützglied 7 stützt sich an einem im Gehäuse 1 angeordneten Halterahmen 2 ab. Es ist mit einem oberen und mit einem unteren Rahmenbügel 28, 29 lösbar oder dauerhaft verbunden, d. h. verschraubt oder verschweißt. Der Halterahmen 2 wird aus dem Lagerstützglied 7 und dem oberen sowie unteren Rahmenbügel 28, 29 gebildet. Die Rahmenbügel tragen über Zapfen 42, 43 obere Querjoche 40, 41 und über Zapfen 48, 49 untere Querjoche 50, 51, in denen die Träger 12, 22 für die Reibräder 11, 21 gelagert sind.

Die abtriebsseitige Lagerung des Zahnrades 8 weist einen stehenden Lagerinnenring auf, so daß das Abtriebszahnrad mit dem Außenring der Lagerung rotiert. Durch die Ausbildung des Lagerstützgliedes und die Anordnung der Lager 24 ist eine axial relativ kurze Reibradgetriebeausführung trotz breiter und damit hoch belastbarer Zahnräder 8, 9 möglich.

Mit 19 ist eine Befestigungsvorrichtung, z. B. eine Verschraubung zwischen dem topfförmigen Lagerstützglied 7 und dem Halterahmen 2, bezeichnet. Mit 20, 30 sind Befestigungsvorrichtungen für die Zapfen 42, 43 der Querjoche 40, 41 und mit 46, 47 Befestigungsvorrichtungen für die Zapfen 48 und 49 der Querjoche 50, 51 bezeichnet.

Die Ausgangswelle 10 ist mit ihrem Lager 32 in einem Halteteil 31 gelagert, welches in die Aussparung 45 im unteren Rahmenbügel 29 teilweise eintaucht. Das Lager 32 wird dabei vom Antriebszahnrad 9 umschlossen, während sich das Halteteil 31 auf dem Getriebegehäuse abstützt bzw. im Halterahmen 2 oder, wie dargestellt, an der Hydrauliksteuerung 26 befestigt ist. Das Lager 32 ist lösbar am Halteteil 31 befestigt; bei sich drehender Ausgangswelle 10 kann der Innenring oder der Außenring des Lagers 32 feststehen.

Während des Betriebes des erfindungsgemäßen Reibradgetriebes wird das z. B. vom Motor eines Kraftfahrzeuges stammende Drehmoment über die Eingangswelle und die Anpreßeinrichtung 4, 35 der Antriebsscheibe 15 übertragen, die wiederum das ihr übertragene Drehmoment über die zugehörigen Reibräder der Ausgangsscheibe 16 zuführt; ferner wird das Drehmoment der Antriebsscheibe 15 über die Mitnahmeverzahnung 25 auf die Drehmomentwelle 34 übertragen und über das entsprechende zugehörige Lager 13 der Antriebsscheibe 5 übermittelt, die wiederum über die zugehörigen Reibräder die Ausgangsscheibe 6 beaufschlagt; sowohl in der ersten als auch in der zweiten Getriebeeinheit wird also das Drehmoment von der Eingangsscheibe zur Ausgangsscheibe über die dazwischen angeordneten Reibräder übertragen, die in vorgewählten, geneigten Ebenen abrollen.

Die beiden Ausgangsscheiben 6, 16 beaufschlagen gemeinsam das Zahnrad 8, welches die Ausgangsleistung über das Abtriebszahnrad 9 der Ausgangswelle 10 mit dem gewünschten Übersetzungsverhältnis überträgt.

### Bezugszeichen

- 1: Gehäuse
- 2: Halterahmen
- 3: Eingangswelle
- 4: Anpreßeinrichtung
- 5: Eingangsscheibe
- 6: Ausgangsscheibe
- 7: Lagerstützglied
- 8: Zahnrad
- 9: Zahnrad
- 10: Ausgangswelle
- 11: Reibrad
- 12: Träger
- 13: Lager
- 14: Buchse
- 15: Eingangsscheibe
- 16: Ausgangsscheibe
- 17: Hohlraum
- 18: Längsachse
- 19: Befestigungsvorrichtung
- 20: Befestigungsvorrichtung
- 21: Reibrad
- 22: Träger
- 23: Lager
- 24: Lager
- 25: Mitnahmeverzahnung
- 26: Hydrauliksteuerung
- 27: Hohlraum
- 28: oberer Rahmenbügel
- 29: unterer Rahmenbügel
- 30: Befestigungsvorrichtung
- 31: Halteteil
- 32: Lager
- 33: Nadellager
- 34: Drehmomentwelle
- 35: Scheibe mit Kurvenbahn
- 36: Axialscheibe
- 37: Lager
- 38: Gewindeöffnung
- 39: Verbindungsöffnung
- 40: oberes Querjoch
- 41: oberes Querjoch
- 42: Zapfen
- 43: Zapfen
- 44: Laschen
- 45: Aussparung
- 46: Befestigungsvorrichtung
- 47: Befestigungsvorrichtung
- 48: Zapfen
- 49: Zapfen
- 50: unteres Querjoch
- 51: unteres Querjoch

- 55: Innenring
- 56: Außenring
- 57: Mitnahmeverzahnung
- 58: Bund
- 59: Sicherungsring
- 60: Sicherungsring

## Patentansprüche

1. Stufenloses Reibradgetriebe, mit folgenden Merkmalen:
- einem Gehäuse (1), einer Eingangswelle (3) und einer Ausgangwelle (10);
- einer koaxial zur Eingangswelle (3) angeordneten Drehmomentwelle (34);
- zwei koaxial zur Eingangswelle angeordneten Eingangsscheiben (5, 15) mit toroidförmigen Innenflächen;
- zwei koaxial zur Eingangswelle angeordneten Ausgangsscheiben (6, 16) mit toroidförmigen Innenflächen, wobei je eine Eingangsscheibe und eine Ausgangsscheibe ein Paar bilden und die beiden Ausgangsscheiben spiegelsymmetrisch zueinander und nebeneinander angeordnet sind;
- mehreren Reibrädern (11, 21), die zwischen den Innenflächen der Paare aus Eingangsscheiben und Ausgangsscheiben verschwenkbar angeordnet sind zur Übertragung eines Drehmomentes von der Eingangsscheibe auf die zugehörige Ausgangsscheibe;
- einem Träger (12, 22) für jedes Reibrad (11, 21);
- oberen und unteren Querjochen (40, 41 und 50, 51), in denen die Träger (12, 22) gelagert sind;
- Zapfen (42, 43 und 48, 49) zur Aufnahme der Querjoche (40, 41 und 50, 51) ;
- einer Verschwenkeinrichtung für die Träger der Reibräder;
- einer Anpreßanordnung (4) zur Erzeugung einer Axialkraft, um die Eingangsscheiben in Richtung Ausgangsscheiben zu beaufschlagen;
- einer Zahnradanordnung (8, 9), deren eines Zahnrad (9) mit der Ausgangswelle (10) verbunden ist und deren anderes Zahnrad (8)zwischen den Ausgangsscheiben (6, 19) angeordnet und mit diesen drehmomentübertragend verbunden ist, und
- einem stationären Lagerstützglied (7), in dem ein Lager (24) für das mit den Ausgangsscheiben drehmomentübertragend verbundene Zahnrad (8) angeordnet ist,
**gekennzeichnet durch** die weiteren Merkmale:
- am Getriebegehäuse (1) ist ein Halterahmen (2) lösbar befestigt, der einen oberen Rahmenbügel (28) und einen unteren Rahmenbügel (29) aufweist,
- das Lagerstützglied verbindet den oberen Rahmenbügel (28) mit dem unteren Rahmenbügel (29) und
- an dem oberen Rahmenbügel (28) und dem unteren Rahmenbügel (29) sind über Befestigungsmittel (20, 30 bzw. 46, 47) die Zapfen (42, 43 und 48, 49) befestigt, welche die oberen und unteren Querjoche (40, 41, und 50, 51) tragen.

2. Reibradgetriebe nach Anspruch 1, **dadurch gekennzeichnet, daß** die Zapfen (42, 43) lösbar mit dem oberen Rahmenbügel (28) und die Zapfen (48, 49) lösbar mit dem unteren Rahmenbügel (29) verbunden sind.

3. Reibradgetriebe nach Anspruch 1 oder 2, **dadurch gekennzeichnet, daß** das Lagerstützglied (7) mit dem oberen Rahmenbügel (28) und dem unteren Rahmenbügel (29) lösbar verbunden ist.

4. Reibradgetriebe nach einem der vorhergehenden Ansprüche, **dadurch gekennzeichnet, daß** das Lagerstützglied (7) mit dem oberen Rahmenbügel (28) und/oder dem unteren Rahmenbügel (29) unlösbar verbunden ist.

5. Reibradgetriebe nach einem der vorhergehenden Ansprüche, **dadurch gekennzeichnet, daß** das Lagerstützglied (7) den Raum zwischen einer Ausgangsscheibe (6) und dem mit der anderen Ausgangsscheibe (16) verbundenen Zahnrad (8) durchsetzt.

6. Reibradgetriebe nach Anspruch 1, **dadurch gekennzeichnet, daß** der Halterahmen (2) ausschließlich über den oberen Rahmenbügel (28) mit dem Gehäuse (1) verbindbar ist.

7. Reibradgetriebe nach Anspruch 1, **dadurch gekennzeichnet, daß** der Halterahmen (2) mit den den stufenlos verstellbaren Getriebeteil des Reibradgetriebes bildenden Bauteilen (3 bis 8) eine vom Gehäuse (1) unabhängige Vormontageeinheit bildet.

## Claims

1. Infinitely variable friction gear, having the following features:
- a housing (1), an input shaft (3) and an output shaft (10) ;
- a torque shaft (34) disposed coaxially with the input shaft (3) ;
- two input disks (5, 15) disposed coaxially with the input shaft and having toroidal inner surfaces;
- two output disks (6, 16) disposed coaxially with the input shaft and having toroidal inner surfaces, wherein in each case one input disk and one output disk form a pair and the two output disks are disposed side by side and in a mirror-symmetrical manner relative to one another;
- a plurality of friction wheels (11, 21), which are disposed pivotally between the inner surfaces of the pairs of input disks and output disks for transmitting a torque from the input disk to the associated output disk;
- a carrier (12, 22) for each friction wheel (11, 21) ;
- top and bottom transverse yokes (40, 41 and 50, 51), in which the carriers (12, 22) are mounted;
- pins (42, 43 and 48, 49) for receiving the transverse yokes (40, 41 and 50, 51);
- a swivelling device for the carriers of the friction wheels;
- a contact pressure arrangement (4) for generating an axial force in order to load the input disks in the direction of the output disks;
- a gearwheel arrangement (8, 9), of which one gearwheel (9) is connected to the output shaft (10) and the other gearwheel (8) is disposed between the output disks (6, 19) and connected to the latter in a torque-transmitting manner, and
- a stationary bearing support member (7), in which a bearing (24) for the gearwheel (8) connected in a torque-transmitting manner to the output disks is disposed,
**characterized by** the further features:
- fastened releasably to the gear housing (1) is a holding frame (2), which comprises a top frame bracket (28) and a bottom frame bracket (29),
- the bearing support member connects the top frame bracket (28) to the bottom frame bracket (29) and
- the pins (42, 43 and 48, 49), which carry the top and bottom transverse yokes (40, 41 and 50, 51), are fastened by fastening means (20, 30 and 46, 47) to the top frame bracket (28) and the bottom frame bracket (29) respectively.

2. Friction gear according to claim 1, **characterized in that** the pins (42, 43) are releasably connected to the top frame bracket (28) and the pins (48, 49) are releasably connected to the bottom frame bracket (29) .

3. Friction gear according to claim 1 or 2, **characterized in that** the bearing support member (7) is releasably connected to the top frame bracket (28) and the bottom frame bracket (29).

4. Friction gear according to one of the preceding claims, **characterized in that** the bearing support member (7) is non-releasably connected to the top frame bracket (28) and/or the bottom frame bracket (29).

5. Friction gear according to one of the preceding claims, **characterized in that** the bearing support member (7) penetrates the space between an output disk (6) and the gearwheel (8) connected to the other output disk (16).

6. Friction gear according to claim 1, **characterized in that** the holding frame (2) is connectable exclusively by the top frame bracket (28) to the housing (1).

7. Friction gear according to claim 1, **characterized in that** the holding frame (2) together with the components (3 to 8) forming the infinitely adjustable gear part of the friction gear forms a preassembly unit independent of the housing (1).

## Revendications

1. Boîte de vitesses toroïdale à variation continue dotée des caractéristiques suivantes :
- un carter (1), un arbre d'entrée (3) et un arbre de sortie (10) ;
- un arbre de couple (34) disposé de façon coaxiale par rapport à l'arbre d'entrée (3),
- deux disques d'entrée (5, 15) disposés de façon coaxiale par rapport à l'arbre d'entrée et comportant des faces intérieures toroïdales ;
- deux disques de sortie (6, 16) disposés de façon coaxiale par rapport à l'arbre d'entrée et comportant des faces intérieures toroïdales, sachant que respectivement un disque d'entrée et un disque de sortie forment une unité et que les deux disques de sortie sont disposés de façon symétrique l'un par rapport à l'autre et qu'ils sont juxtaposés ;
- plusieurs roues à friction (11, 21) disposées de façon orientable entre les faces intérieures des unités composées de disques d'entrée et de disques de sortie, afin qu'ils puissent transmettre un couple respectivement du disque d'entrée au disque de sortie associé ;
- un support (12, 22) pour chaque roue à friction (11, 21) ;
- des traverses fixes supérieures et inférieures (40, 41, et 50, 51) dans lesquelles sont logés les supports (12, 22) ;
- des tourillons (42, 43 et 48, 49) pour le logement des traverses fixes (40, 41 et 50, 51) ;
- un dispositif de pivotement pour les supports des roues à friction ;
- une unité de serrage (4) pour la génération d'une force axiale, afin de pouvoir mettre sous contrainte les disques d'entrée dans la direction des disques de sortie ;
- un ensemble d'engrenages (8, 9) dont l'un des engrenages (9) est lié à l'arbre de sortie (10) et dont l'autre des engrenages (8) est disposé entre les deux disques de sortie (6, 19), recevant de ceux-ci le couple à transmettre, et
- un élément de support du palier (7) stationnaire, dans lequel est logé un palier (24) pour l'engrenage (8) lié aux disques de sortie de façon à pouvoir transmettre le couple **caractérisée par** des autres caractéristiques suivantes :
- en ce que sur le carter de la boîte de vitesses (1) est fixé un cadre de fixation (2) de façon amovible, qui comporte un étrier supérieur (28) et un étrier inférieur (29),
- en ce que l'élément de support du palier lie l'étrier supérieur (28) à l'étrier inférieur (29), et
- en ce que sur l'étrier supérieur (28) et sur l'étrier inférieur (29) sont fixés, à l'aide de moyen de fixation (20, 30 et/ou 46, 47) les tourillons (42, 43 et 48, 49), qui supportent les traverses fixes supérieures et inférieures (40, 41 et 50, 51).

2. Boîte de vitesses toroïdale à variation continue selon la revendication 1, **caractérisée en ce que** les tourillons (42, 43) sont liés de façon amovible à l'étrier supérieur (28) et **en ce que** les tourillons (48, 49) sont liés de façon amovible à l'étrier inférieur (29).

3. Boîte de vitesses toroïdale à variation continue selon les revendications 1 et 2, **caractérisée en ce que** l'élément de support du palier (7) est lié de façon amovible à l'étrier supérieur (28) et à l'étrier inférieur (29).

4. Boîte de vitesses toroïdale à variation continue selon une des revendications précédentes, **caractérisée en ce que** l'élément de support du palier (7) est lié de façon non amovible à l'étrier supérieur (28) et/ou à l'étrier inférieur (29).

5. Boîte de vitesses toroïdale à variation continue selon une des revendications précédentes, **caractérisée en ce que** l'élément de support du palier (7) pénètre l'espace entre le disque de sortie (6) et celui de l'engrenage (8) lié à l'autre disque de sortie (16).

6. Boîte de vitesses toroïdale à variation continue selon la revendication 1, **caractérisée en ce que** le cadre de fixation (2) ne peut être lié au carter (1) qu'au moyen de l'étrier supérieur (28).

7. Boîte de vitesses toroïdale à variation continue selon la revendication 1, **caractérisée en ce que** le cadre de fixation (2) forme - avec les éléments forment la partie à variation continue de la boîte de vitesses toroïdale (3 à 9) - une unité de pré-assemblage indépendante du carter (1).
